# FASCICULE DE BREVET EUROPEEN

(11) **EP 2 488 984 B1**
(45) Date de publication et mention de la délivrance du brevet: **30.05.2018**
(21) Numéro de dépôt: 10782340.3
(22) Date de dépôt: 11.10.2010
(51) Int. Cl.: G06F 21/57, G06F 21/86

(54) **SYSTÈME INFORMATIQUE D'ACCÈS À DES DONNÉES CONFIDENTIELLES PAR AU MOINS UN BOÎTIER DISTANT ET BOÎTIER DISTANT**
COMPUTERSYSTEM FÜR DEN ZUGANG ZU VERTRAULICHEN DATEN ÜBER MINDESTENS EINE ENTFERNTE EINHEIT UND ENTFERNTE EINHEIT
COMPUTER SYSTEM FOR ACCESSING CONFIDENTIAL DATA BY MEANS OF AT LEAST ONE REMOTE UNIT AND REMOTE UNIT

(30) Priorité: 12.10.2009 FR 0957127
(43) Date de publication de la demande: 22.08.2012
(73) Titulaire: Groupe des Ecoles Nationales d'Economie et Statistique, 91120 Palaiseau (FR)
(72) Inventeur: GADOUCHE, Kamel, F-91400 Orsay (FR); DEBONNEL, Eric, F-92240 Malakoff (FR)
(74) Mandataire: Jacobacci Coralis Harle
(86) Numéro de dépôt international: PCT/FR2010/052143
(87) Numéro de publication internationale: WO 2011/045516

(56) Documents cités:
- EP-A1- 1 962 221
- US-A1- 2002 042 882
- US-A1- 2007 245 409

## Description

La présente invention concerne un système informatique d'accès à des données confidentielles par au moins un boîtier distant ainsi qu'un boîtier distant. Elle a des applications dans le domaine traitement de l'information, plus particulièrement pour la sécurisation de données confidentielles contenues dans un moyen informatisé centralisé et qui doivent être traitées par des utilisateurs distants dudit moyen informatisé centralisé.

L'invention objet de cette demande a été développée dans le Groupe des Ecoles Nationales d'Economie et Statistique (GENES) rattaché à l'Institut National de la Statistique et des Etudes Economiques (INSEE) rattaché au Ministère de l'Economie, de l'Industrie et de l'Emploi.

Dans de nombreuses industries, commerces ou établissements publics d'enseignement et/ou recherche, il existe des bases de données informatiques contenant des informations sensibles qui doivent rester confidentielles ou, à tout le moins, qu'on ne doit pas pouvoir transférer ou copier en dehors du lieu où elles sont stockées et traitées, en général dans un serveur informatique. Toutefois, il peut être nécessaire à des utilisateurs extérieurs au lieu de stockage et par l'intermédiaire d'un réseau informatique public, en particulier INTERNET®, de pouvoir utiliser ces informations qui sont par exemple des données individualisées pour effectuer des calculs, recherches, etc. afin de produire des résultats à partir de ces données confidentielles, résultats qui ne doivent pas permettre de remonter aux données individuelles de départ.

Il est donc souhaitable de disposer d'un système qui permette l'accès et le traitement de ces données confidentielles sans pour autant que l'utilisateur ou même un tiers malveillant ne puisse récupérer, à partir d'un accès à distance, les données confidentielles contenues dans un serveur centralisé.

Il est également souhaitable que l'architecture du système proposé puisse répondre dans de bonnes conditions aux besoins des utilisateurs/chercheurs voulant travailler sur ces données sensibles/confidentielles. Il est donc nécessaire de prendre en compte de nombreuses contraintes, comme des contraintes de sécurité élevée sur tous les composants de l'architecture, des contraintes d'ergonomie dont notamment une interface et des outils pour les utilisateurs/chercheurs leur permettant de travailler dans de bonnes conditions, des contraintes d'intégration car il faut pouvoir s'intégrer à l'environnement informatique des établissements distants des utilisateurs/chercheurs quel qu'il soit, et des contraintes économiques.

En pratique, le but de sécurisation de l'accès à des données sensibles/confidentielles est atteint grâce à la combinaison de moyens matériels et de moyens logiciels, notamment un boîtier distant spécialement configuré et notamment une liaison tunnel chiffrée sur réseau public. Il est ici proposé, pour accéder à des données confidentielles, de mettre en oeuvre un équipement particulier dans un poste distant qui est une « boîte noire » dédiée et verrouillée au sein d'une architecture matérielle et logicielle particulière.

A l'opposé, l'état de l'art dans le champ d'application visé repose sur des solutions purement logicielles. Or, une solution purement logicielle ne répond pas à la problématique exposée :
- Elle est moins sure car elle se repose sur un socle non maîtrisé qui est le poste de travail de l'utilisateur distant (PTUD). Ce système est alors exposé à une fuite des données accidentelle ou intentionnelle (logiciel espion, système de capture d'écran avec reconnaissance de caractères...)
- Elle est plus coûteuse en termes de déploiement car le PTUD n'est pas forcément compatible, en termes de maintenance car l'évolution du PTUD impose un redéploiement et inversement l'évolution de la solution logicielle peut demander une mise à jour du PTUD, en termes d'assistance car une modification du PTUD peut entraîner des dysfonctionnements de la solution logicielle, etc.

C'est cette adhérence avec l'environnement informatique de l'utilisateur distant qui explique qu'une solution purement logicielle ne répond pas aux besoins exposés. L'invention propose donc un système mettant en oeuvre des moyens matériels permettant de s'affranchir des inconvénients ci-dessus cités.

On connaît dans le domaine du contrôle d'accès le système décrit dans US 2007/245409 A1 dans lequel il est mis en oeuvre un client 10 et un serveur de fichiers 30 reliés par une liaison HTTPS et le client comporte des applications. Cette liaison peut être directe ou non, par l'intermédiaire d'un dispositif intermédiaire 1250 (« appliance » ou « proxy server »). Il est prévu que ce dispositif 1250 comporte un processeur de cryptage 3260. Dans ce document, la machine locale (client) est un appareil quelconque, par exemple un microordinateur classique doté des logiciels et système d'exploitation habituels. Il y est notamment indiqué que la machine locale (client) peut demander une application et des données au serveur et, en réponse, le serveur lui envoi l'application et les données pour exécution locale. La machine locale de ce document peut comporter des moyens de stockage amovibles (ex. : CD-R/RW, « USB storage devices ») qui permettent donc l'enregistrement de données localement et leur dissémination ou le chargement de programmes dans la machine locale.

Le document EP 1 962 221 A1 divulgue un « OS » en mémoire morte et crypté. Lors de l'initialisation du BIOS celui-ci est décrypté pour être rendu opérationnel.

Le document US 2002/042 882 A1 divulgue un certain nombre de fonctions et/ou dispositifs destinés à assurer un niveau de sécurité élevé à un ordinateur. Contre les intrusions physiques, un circuit de détection de tripatouillage est proposé ainsi qu'un moyen d'identification de l'utilisateur.

L'invention concerne donc un système informatique d'accès à des données confidentielles par au moins un boîtier distant utilisé par un utilisateur, les données étant stockées dans un moyen informatique centralisé sécurisé comportant un moyen de traitement desdites données destiné à produire des résultats, une liaison informatique étant établie entre ledit boîtier distant et le moyen informatique centralisé, le boîtier distant étant un microordinateur fonctionnant sous la dépendance d'un système d'exploitation local démarrant par une phase d'amorçage.

Selon l'invention, le système est configuré de telle manière que la liaison informatique est une liaison tunnel chiffrée sur réseau public qui est établie au sein du système de sorte que le boîtier distant soit intégré logiquement au moyen informatique centralisé afin que ledit boîtier distant soit administrable uniquement à distance et de sorte que ledit boîtier ne soit pas exploitable en l'absence de l'établissement de la liaison informatique, le système étant en outre configuré de telle manière que lors des accès aux données ledit boîtier distant ne reçoive que des informations d'affichage liées au traitement effectué sur les données et produites par le moyen informatique centralisé, le microordinateur du poste distant étant sous forme d'une carte électronique qui comporte en outre un circuit électronique de cryptage, le système d'exploitation ainsi que les informations nécessaires au fonctionnement dudit boîtier distant étant stockés de manière
cryptée dans ledit boîtier distant, et ledit boîtier distant est constitué d'un boîtier scellé contenant la carte électronique et des entrées/sorties dont une entrée/sortie de moyen(s) d'identification(s) reliée à au moins un moyen d'identification de l'utilisateur et une entrée/sortie de réseau informatique destinée à la liaison tunnel chiffrée.

Le terme microordinateur pour le boîtier distant couvre en fait tout dispositif de programmable permettant un accès réseau et comportant des moyens d'interfaçage avec un utilisateur.

Dans divers modes de mise en oeuvre de l'invention, les moyens suivants pouvant être utilisés seuls ou selon toutes les combinaisons techniquement possibles, sont employés :
- le boîtier distant est administrable uniquement à distance par le moyen informatique centralisé,
- boîtier distant comporte en outre un moyen de configuration local accessible et visible de l'utilisateur, ledit moyen de configuration local comportant un afficheur et un ensemble de touches disposés dans le boîtier et permettant une configuration sur site de paramètres locaux,
- les paramètres locaux configurables sont par exemple des configurations d'affichage, l'adresse réseau du boîtier,
- le réseau public est un réseau INTERNET®,
- le boîtier distant comporte un nombre réduit d'entrées/sorties physiques connectables,
- les entrées/sorties physiques connectables sont une entrée/sortie de clavier, une entrée/sortie pour organe de type pointeur, par exemple souris, une entrée/sortie de moyen(s) d'identification(s), une entrée/sortie d'écran d'affichage, une entrée/sortie de réseau informatique destinée à la liaison tunnel chiffrée,
- le circuit électronique de cryptage de la carte électronique du boîtier est du type TPM (« Trusted Platform Module »),
- le circuit électronique de cryptage TPM fonctionne avec la technologie BitLocker®,
- la carte électronique microordinateur comporte un BIOS verrouillable par mot de passe,
- la carte électronique microordinateur présente une ou plusieurs des caractéristiques suivantes : capacité mémoire centrale au moins 2Go, affichage graphique type VGA et/ou DVI, entrée/sortie de réseau informatique au moins 10/100 Mbits/s, deux entrées/sorties de type USB, mémoire de masse d'au moins 32 Go (puce ou mécanique),
- l'entrée/sortie de réseau informatique est sur connecteur RJ45,
- l'entrée/sortie de réseau informatique est compatible avec un amorçage PXE (« Pre-boot eXecution Environment» : démarrage par le réseau) paramétrable et activable/désactivable à partir du BIOS de la carte électronique,
- la carte électronique est basée sur une carte PC industrielle de format réduit,
- la carte électronique du boîtier distant est de type Mini-ITX,
- le boîtier distant mesure approximativement H 70 mm x P 200 mm x L 240 mm,
- la liaison tunnel chiffrée sur réseau public s'effectue indirectement à partir du boîtier distant, le boîtier distant étant relié à un réseau local et un équipement d'interconnexion au réseau public étant relié audit réseau local,
- la liaison tunnel chiffrée sur réseau public s'effectue directement à partir du boîtier distant, soit un équipement d'interconnexion au réseau public est disposé entre l'entrée/sortie de réseau informatique du boîtier distant et le réseau public, soit l'équipement d'interconnexion au réseau public est incorporé au boîtier distant,
- l'équipement d'interconnexion au réseau public est incorporé au boîtier distant et l'entrée/sortie de réseau informatique du boîtier distant est omise,
- l'équipement d'interconnexion au réseau public est incorporé au boîtier distant et l'entrée/sortie de réseau informatique du boîtier distant est présente, ce qui permet d'utiliser le boîtier distant en direct ou indirect sur le réseau public,
- l'équipement d'interconnexion au réseau public est du type filaire ou radio,
- la liaison tunnel chiffrée est du type VPN-SSL (« Secure Sockets Layer virtual private network»),
- le chiffrage sur la liaison tunnel chiffrée est double, des types SSTP (« Secure Socket Tunneling Protocol»), RDP (« Remote Desktop Protocol »),
- le système d'exploitation du poste distant est choisi parmi les produits de la famille WINDOWS®,
- le boîtier distant comporte en outre un pare-feu, le protégeant du réseau local hôte,
- l'afficheur comporte un afficheur alphanumérique à cristaux liquides,
- l'afficheur alphanumérique à cristaux liquides est du type 1 ligne 16 caractères,
- l'afficheur alphanumérique à cristaux liquides est du type 2 lignes 16 caractères,
- l'ensemble de touches est un ensemble réduit de moins de 7 touches,
- le boîtier distant est alimenté électriquement par une source d'alimentation extérieure au boîtier,
- la source d'alimentation extérieure au boîtier est une alimentation secteur,
- le moyen informatique centralisé comporte en outre un pare-feu sur la liaison tunnel chiffrée,
- le pare-feu interdit toute connexion sortante du moyen informatique centralisé,
- le moyen informatique centralisé comporte un serveur SSTP (« Secure Socket Tunneling Protocol») de liaison tunnel SSL (« Secure Sockets Layer» ), au moins un serveur de traitement comportant les données confidentielles, un serveur de gestion de la sécurité, lesdits serveurs du moyen informatique centralisé étant sur un réseau local dédié,
- le moyen informatique centralisé comporte en outre un serveur de sauvegarde disque sur le réseau local dédié,
- lesdits serveurs du moyen informatique centralisé sont physiquement un ou plusieurs appareils informatiques, en effet, les fonctions des serveurs distincts peuvent être séparées ou regroupées dans un ou plusieurs appareils informatiques du type ordinateur physique, microordinateur physique, serveur physique,
- le serveur de gestion de la sécurité est gestionnaire de certificats, contrôleur de domaine, de la politique de sécurité du/des boîtiers distants, de leur supervision et leur répudiation,
- les moyens d'identifications sont choisis parmi un ou plusieurs des moyens suivants : un lecteur de carte à puce, un lecteur biométrique, un lecteur d'empreinte digitale,
- un moyen d'identification est un mot de passe.

L'invention concerne également un boîtier distant pour mise en oeuvre dans un système informatique d'accès à des données confidentielles par au moins un boîtier distant utilisé par un utilisateur, les données étant stockées dans un moyen informatique centralisé sécurisé comportant un moyen de traitement desdites données destiné à produire des résultats, une liaison informatique étant établie entre ledit boîtier distant et le moyen informatique centralisé, le boîtier distant étant un microordinateur fonctionnant sous la dépendance d'un système d'exploitation local démarrant par une phase d'amorçage, ledit boîtier ayant une ou plusieurs des caractéristiques décrites et notamment étant tel qu'il est spécialement adapté au système de l'invention et qu'il permet que la liaison informatique soit une liaison tunnel chiffrée sur réseau public et que ledit boîtier ne soit pas exploitable en l'absence de l'établissement de la liaison informatique, la liaison tunnel chiffrée permettant l'intégration logique du boîtier distant au moyen informatique centralisé afin que ledit boîtier distant soit administrable uniquement à distance, le microordinateur du poste distant étant sous forme d'une carte électronique qui comporte en outre un circuit électronique de cryptage, le système d'exploitation ainsi que les informations nécessaires au fonctionnement dudit boîtier distant étant stockés de manière cryptée dans ledit boîtier distant, et ledit boîtier distant est constitué d'un boîtier scellé contenant la carte électronique et des entrées/sorties dont une entrée/sortie de moyen(s) d'identification(s) reliée à au moins un moyen d'identification de l'utilisateur et une entrée/sortie de réseau informatique destinée à la liaison tunnel chiffrée.

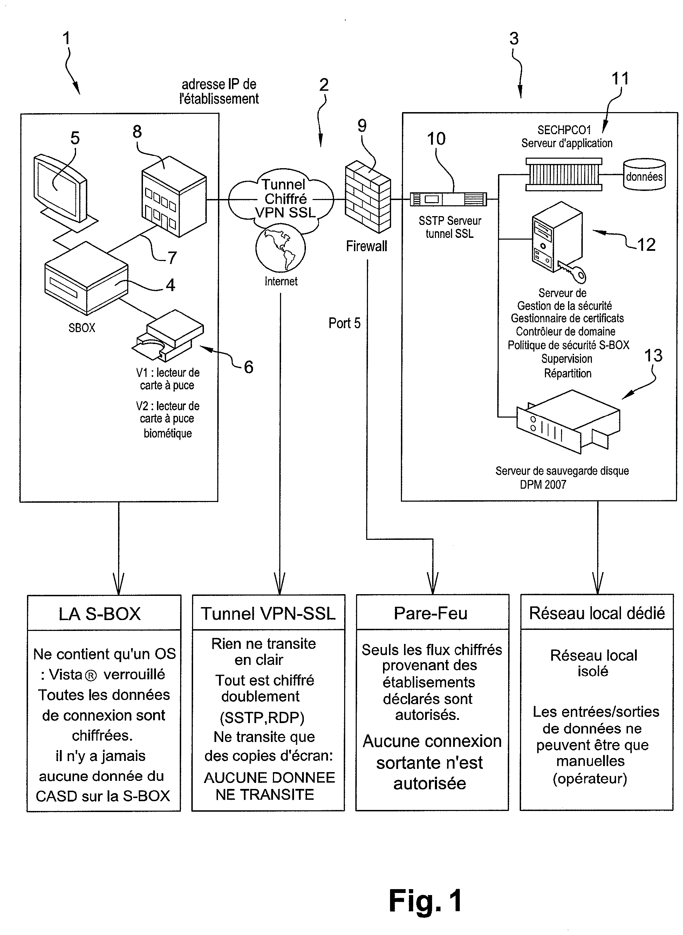

L'invention sera mieux comprise, grâce à la description ci-après, qui se rapporte à un mode de réalisation préféré, donné à titre d'exemple non limitatif, et expliqué avec référence au dessin annexé, dans lequel la figure 1 est une représentation schématique de l'architecture générale du système.

Dans l'exemple de réalisation décrit par la suite, on considère le cas d'un environnement de recherche dans lequel l'utilisateur est un chercheur qui doit accéder à distance aux données confidentielles stockées dans un centre sécurisé comportant un serveur desdites données. Dans ce contexte, le boîtier distant constitue un terminal sur lequel le chercheur travaille.

Ce boîtier distant, qui est sous forme d'un boîtier de taille réduite comportant une carte électronique de microordinateur, est sécurisé physiquement et fonctionnellement contre des utilisations non conformes et non autorisées. Ces moyens de sécurisation sont notamment des blocages physiques et/ou logiques des ports externes non prévus pour l'exploitation du système. Par exemple un éventuel port série RS232 ou parallèle de la carte électronique n'est pas relié à son connecteur ou le connecteur est omis ou il est masqué/rendu inutilisable. A noter que comme toute entrée/sortie du microordinateur, le blocage peut également être logique/logiciel : le/les ports en question n'ont pas de pilote(s) dans le système d'exploitation du boîtier distant ou le pilote est désactivé. Le boîtier est également physiquement protégé contre les intrusions par sa structure (résistance mécanique, absence d'ouverture dans certaines parties du boîtier...), son mode d'assemblage (utilisation de vis de sécurité), détection d'intrusion par un contacteur électrique, par une cellule photoélectrique...

De plus, pour l'établissement de la liaison tunnel chiffrée entre le boîtier distant de l'utilisateur et le centre sécurisé avec son serveur de données, la séquence d'amorçage est préétablie par programmation préalable du poste distant. En outre, le système d'exploitation local est verrouillé et les informations mémorisées dans le boîtier du poste distant, programmes ou données locales, le sont sous forme cryptées.

Le poste distant est donc un boîtier autonome bridé embarquant son propre système d'exploitation (Windows Vista® dans cet exemple). Ce boîtier est protégé du réseau local hôte par un pare-feu embarqué et ses ports USB® sont restreints au périphériques autorisés par logiciel grâce au dispositif d'administration centralisé qui se met en place à l'amorçage du boîtier.

Pour utiliser son boîtier distant, le chercheur doit y ouvrir une session, ce qui ne peut se faire qu'en s'authentifiant à l'aide d'un moyen d'identification qui est ici une carte à puce contenant un certificat valide, accès par code pin, et qui est lue par un lecteur relié au poste par une liaison USB. Dans un mode préféré de réalisation, un capteur biométrique est également mis en oeuvre pour l'authentification du chercheur, de préférence du type lecteur d'empreinte digitale.

D'une manière générale, en ce qui concerne les utilisateurs, une formation adéquate des utilisateurs concernant le système est préférable et la première connexion du poste distant s'effectue de préférence sous le contrôle du gestionnaire du système ce qui permet une initialisation du code pin de la carte à puce et la prise des empreintes au cas où un tel capteur est mis en oeuvre.

Une fois la session ouverte sur le poste distant, un programme d'accès au serveur de données confidentielles du moyen informatique centralisé sécurisé s'exécute afin de créer la liaison informatique tunnel chiffrée sur réseau public, par exemple INTERNET®, et c'est le seul programme qui peut s'exécuter après une ouverture de session. En conséquence, l'utilisateur ne voit et ne peut utiliser qu'un seul programme prédéfini à l'avance. Un utilitaire logiciel du boîtier distant surveille l'activité du chercheur (frappe clavier notamment) et lorsqu'il détecte une absence d'activité pendant un temps déterminé (un compteur de temps d'inactivité s'incrémentant automatiquement est remis à zéro à chaque action du chercheur), il ferme la session qui était ouverte et/ou donne la possibilité pendant un temps déterminé au chercheur d'effectuer une action qui remet à zéro le compteur de temps d'inactivité. De cette façon, si le chercheur oublie de fermer sa session à la fin de son travail, elle le sera automatiquement ce qui limitera les risques d'utilisation du poste distant par une personne tierce une fois le chercheur parti. Dans un mode préféré de réalisation, un utilitaire particulier demandera à l'utilisateur du boîtier distant une authentification biométrique à intervalle de temps régulier. Ceci afin de s'assurer en permanence de la réelle identité de l'utilisateur.

Pour la création de la liaison tunnel chiffrée, tous les éléments d'information permettant la connexion réseau sont disponibles et chiffrés sur la mémoire de masse du poste distant. En effet, la carte électronique de microordinateur, dite carte mère, du boîtier distant comporte une puce de cryptage et la/les clefs de cryptage utilisées sont stockées dans le boîtier distant également d'une manière cryptée. Par construction, aucune donnée confidentielle du moyen informatique centralisé sécurisé n'est transférée et stockée dans le poste distant, seules des copies d'écran ou des instructions d'affichage sont envoyées au poste distant par le serveur sécurisé central contenant les données confidentielles. Tous les échanges entre le poste distant et le serveur sécurisé central se font par le réseau public, INTERNET® dans cet exemple, et il a été mis en place un système de communication chiffré, un tunnel chiffré, de bout en bout. De plus, seuls les boîtiers distants se trouvant physiquement dans des établissements identifiés par leur adresse réseau peuvent atteindre, dans le moyen informatique centralisé sécurisé, le serveur sécurisé central contenant les données confidentielles.

Toujours pour des raisons de sécurité, le système a été conçu pour permettre de réaliser à distance toutes les opérations de gestion, de surveillance, de mise à jour logicielle et sécurité de chaque poste distant. Il permet également de pouvoir autoriser ou répudier centralement (coté du moyen informatique centralisé sécurisé) un poste distant ou un certificat donné.

Le boîtier distant peut s'intégrer à tout environnement informatique et de réseau local du lieu de l'utilisateur/chercheur. A cause de cela, il est préférable que la configuration de cet environnement informatique et ce réseau local soit connue afin d'efficacement gérer la sécurité des accès par le moyen informatique centralisé sécurisé qui comporte le serveur de données confidentielles.

La connexion entre le poste distant et le moyen informatique centralisé sécurisé se passe en deux temps. Dans un premier temps, coté boîtier distant, l'insertion de la carte à puce dans le lecteur de carte et couplé avec l'identification biométrique (empreinte) et un mot de passe, permettent d'ouvrir une session locale sur le poste distant. Une fois ouverte, la session locale permet au chercheur, dans un deuxième temps, de se connecter au moyen informatique centralisé sécurisé et d'y ouvrir une session centrale (par exemple en utilisant le même mot de passe). L'identification permise par la carte à puce est nécessaire pour l'ouverture des deux sessions. A noter que le fait d'enlever la carte du lecteur ne ferme que la session locale, en laissant active la session centrale, on la retrouve dans l'état dans laquelle on l'a laissée en rouvrant la session locale sur le poste distant, c'est-à-dire en remettant la carte à puce dans le lecteur et l'identification biométrique et en redonnant le mot de passe. Pour se déconnecter de la session centrale, il suffit de la fermer. A noter que comme pour le poste distant, en option, une détection d'inactivité au niveau du moyen informatique centralisé sécurisé peut être mise en oeuvre pour fermer au bout d'un temps déterminé toute session démarrée par un poste distant et sur laquelle aucune activité n'a eu lieu dans le moyen informatique centralisé.

On vient donc de voir ce qui concerne le poste distant que les utilisateurs utilisent pour accéder aux données confidentielles. On va maintenant voir ce qui concerne le moyen informatique centralisé sécurisé qui stocke les données confidentielles et qui comporte des moyens de traitement desdites données.

Le moyen informatique centralisé sécurisé comporte un serveur sécurisé sur lequel les chercheurs se connectent à distance pour travailler. Typiquement, ce serveur possède quatre processeurs, 28 Go de mémoire vive, 1,7 To de disque dur ultrarapide. Il est par ailleurs très largement évolutif (possibilité d'ajout de mémoire et de processeurs si nécessaire et mise en grappe/« cluster »). Il dispose d'une interface Windows® avec les logiciels couramment utilisés en matière de traitement de données statistiques.

Afin d'améliorer encore la sécurité, un utilisateur est défini par le couple [identifiant, projet] ce qui a pour conséquence qu'un même chercheur travaillant sur deux projets n'aura pas accès aux données des deux projets au cours de la même session. De même, les espaces de travail contenant les fichiers de données de chaque projet sont isolés les uns des autres. D'une part, les permissions d'accès pour chaque projet sont parfaitement définies. Et, d'autre part, il est impératif d'éviter le partage d'information et/ou de ressources (données, programmes ...) pour garantir, par exemple, qu'aucune table temporaire d'un projet ne puisse être accédée par les membres d'un autre projet.

Toujours dans le moyen informatique centralisé sécurisé, un serveur de sauvegarde permet de sauvegarder sur disque toutes les configurations système et tous les travaux des chercheurs. A noter que la solution de sauvegarde à base de bandes magnétiques n'a pas été choisie pour éviter toute dissémination de ces bandes et des données qu'elles contiennent.

A noter également que pour encore améliorer la sécurité, toute entrée et/ou sortie concernant des données confidentielles dans le moyen informatique centralisé sécurisé ne peut/peuvent se faire que manuellement par déplacement physique d'un opérateur sur le site et, même de préférence, dans le local sécurisé qui contient le moyen informatique centralisé sécurisé. D'une manière générale, toute entrée d'information (données de tous format, programmes sous forme de source...) dans le moyen informatique centralisé sécurisé s'effectue sous le contrôle d'un administrateur du système.

Typiquement, les utilisateurs/chercheurs ont accès :
- aux données confidentielles auxquelles ils doivent avoir accès dans le cadre de leur projet et qui sont stockées dans un répertoire spécifique («SA-Sources»).
- à un espace destiné à abriter les fichiers intermédiaires créés dans le cadre de leurs projets : programmes, bases de données, textes, etc. Cet espace est accessible à l'intérieur d'un répertoire spécifique («EA-Projets») et plus particulièrement dans un dossier dont le nom est le «nom court» du projet de recherche et qui figure sur leur carte à puce. A l'intérieur de ce dossier, chaque chercheur participant au projet dispose d'un sous-dossier dont le nom est son propre «nom court» de chercheur.

Les projets sont donc cloisonnés. Les chercheurs relevant d'autres projets ne peuvent accéder à aucun des sous-espaces correspondants et les chercheurs travaillant ensemble sur un projet ne peuvent pas accéder aux sous-espaces personnels de chacun, mais accèdent tous au répertoire racine de leur projet où ils peuvent mettre des fichiers et créer des répertoires partagés. Les administrateurs de données n'ont également pas accès aux espaces de travail des chercheurs. Les chercheurs peuvent travailler à l'intérieur du moyen informatique centralisé sécurisé à partir de leurs postes distants, en utilisant ces espaces, ces fichiers et les logiciels disponibles. Cependant, les chercheurs ne peuvent rien exporter de façon autonome, ni sur une imprimante, ni sur un fichier externe et ils ne peuvent pas non plus faire de «copier/couper/coller».

Ainsi, les chercheurs ne peuvent exporter que des résultats respectant le secret statistique, c'est-à-dire des résultats qui ne permettent pas l'accès aux données confidentielles individuelles et ils ne peuvent donc pas exporter des informations d'identification, directe ou indirecte, par exemple, d'une personne ou d'une entreprise et qui sont stockées dans le serveur central.

Dans un mode de mise en oeuvre particulier, le dispositif d'exportation est configuré de la manière suivante :
- Les chercheurs constituent dans leur espace personnel «l'objet» qu'ils souhaitent exporter dans un fichier, en s'assurant qu'il respecte parfaitement le secret statistique et ils accompagnent cet objet d'une courte documentation le décrivant dans un autre fichier.
- Les chercheurs déposent ces deux fichiers dans un répertoire de «sortie» qui est non accessible en lecture aux chercheurs, sur le modèle d'une urne : le dépôt est possible, mais pas la consultation ni la modification une fois le dépôt effectué.
- Les chercheurs envoient un message à un service d'administration des données du système en signalant la demande de sortie. Un administrateur des données du système examine alors les «objets» contenus dans ledit répertoire de sortie. Si les données sont bien conformes au secret statistique, il les transfère dans un répertoire de «Départ» qui est non accessibles aux chercheurs et une copie de « l'objet » est en même temps archivée.
- Des informaticiens transfèrent physiquement les « objets » du répertoire «Départ» sur un compte qui se trouve en dehors du moyen informatique centralisé sécurisé et une fois cette opération effectuée, ces « objets » sont envoyés par messagerie électronique à leurs destinataires.

Pour ce qui concerne les informations qui peuvent être importées dans le moyen informatique centralisé sécurisé par les utilisateurs, seuls peuvent être importés des objets «inactifs/non exécutables» (aucun exécutable) ou des programmes d'un type donné documentés. L'importation s'effectue sous le contrôle d'un administrateur à qui les chercheurs envoient par messagerie électronique « l'objet » en question ainsi qu'une description de chaque fichier. Après contrôle, le chercheur est informé de l'importation et il retrouve ses fichiers dans un répertoire spécifique du moyen informatique centralisé sécurisé auquel il a accès.

La Figure 1 présente l'architecture générale du système. Sur la gauche de la Figure 1 on a représenté ce qui concerne l'utilisateur avec son poste distant 1 comportant le boîtier distant 4 auquel est relié par liaison USB® un clavier (non représenté), des lecteurs 6 de carte à puce et biométrique ainsi qu'un écran de visualisation 5. Un moyen de pointage (non représenté) peut également être relié par liaison USB® au boîtier. Le boîtier 4 ne contient qu'un système d'exploitation VISTA® verrouillé et toutes les informations de connexion sont chiffrées. Ce boîtier 4 est relié à un réseau local 7 type ETHERNET® relié à un équipement terminal 8 de connexion à un réseau INTERNET® 2. Ainsi, dans cet exemple, la liaison tunnel chiffrée sur INTERNET® s'effectue indirectement à partir du boîtier, l'entrée/sortie de réseau informatique du poste distant étant reliée à un réseau local ayant un accès au réseau INTERNET®. L'établissement dans lequel est disposé le poste distant 1 possède une adresse IP. Sur le réseau INTERNET® 2, entre le moyen informatique centralisé sécurisé et le poste distant, rien ne transite en clair et tout est chiffré doublement (SSTP, RDP) dans un tunnel chiffré.

Sur la partie droite de la Figure 1 on a représenté ce qui concerne le moyen informatique centralisé sécurisé 3 dans lequel sont stockées les données confidentielles. Un pare-feu 9 est disposé en interface du moyen informatique centralisé sécurisé sur le réseau INTERNET® 2 sur lequel une liaison tunnel chiffrée VPN SSL est établie entre le poste distant et le moyen informatique centralisé sécurisé 3. Ce dernier comporte un serveur d'application 11 SECHPC01 permettant le stockage et le traitement sécurisé des données confidentielles, un serveur de gestion de la sécurité 12, un serveur de sauvegarde DPM 2007 et un serveur de communication SSTP pour le tunnel SSL. Cet ensemble de serveurs est sur un réseau local dédié au sein de l'établissement dans lequel se trouve le moyen informatique centralisé sécurisé 3. Sur ce réseau local dédié, les introductions/extractions (entrées/sorties) de données confidentielles ne peuvent être, de préférence, que manuelles par un opérateur. Le pare-feu 9 autorise seulement les entrées de flux chiffrés provenant des établissements déclarés et autorisés possesseurs de boîtiers distants. Aucune connexion sortante n'est autorisée et seulement des copies d'écran ou instructions d'affichage sont renvoyées du moyen informatique centralisé sécurisé vers les boîtiers distants. Aucune donnée confidentielle ne peut sortir du moyen informatique centralisé sécurisé 3.

On comprend bien que l'invention peut être déclinée selon de nombreuses autres possibilités sans pour autant sortir du cadre défini par les revendications. Enfin, les dénominations protégées citées dans ce document appartiennent à leurs propriétaires.

## Revendications

1. Boîtier distant pour mise en oeuvre dans un système informatique d'accès sécurisé à des données confidentielles par au moins un boîtier distant (4) utilisé par un utilisateur et spécifiquement et uniquement conçu pour cet accès sécurisé, les données étant stockées dans un moyen informatique centralisé sécurisé (3) comportant un moyen de traitement desdites données destiné à produire des résultats, une liaison informatique (2) tunnel chiffrée sur réseau public étant établie entre ledit boîtier distant et le moyen informatique centralisé, le boîtier distant étant un microordinateur fonctionnant sous la dépendance d'un système d'exploitation local démarrant par une phase d'amorçage, le système étant configuré de telle manière que lors des accès aux données ledit boîtier distant ne reçoive que des informations d'affichage liées au traitement effectué sur les données et produites par le moyen informatique centralisé, les données du moyen informatique centralisé n'étant donc pas transmises au boîtier, le microordinateur du boîtier distant étant sous forme d'une carte électronique comportant des entrées/sorties et un circuit électronique de cryptage,
**caractérisé en ce que** ledit boîtier distant est constitué d'un boîtier scellé et **en ce que**
- la carte électronique comporte :
∘ une entrée/sortie destinée à des moyen(s) d'identification(s) (6) reliée à au moins un moyen d'identification de l'utilisateur et
∘ une entrée/sortie de réseau informatique (7) destinée à la liaison tunnel chiffrée, et **en ce que**
- le boîtier distant (4) comporte des moyens d'exploitation permettant :
∘ d'une part et sous réserve d'une authentification de l'utilisateur, l'ouverture d'une session locale sur ledit boîtier et la mise en oeuvre d'une phase d'amorçage avec création de la liaison informatique tunnel chiffrée entre ledit boîtier distant et le moyen informatique centralisé, le boîtier distant étant alors intégré logiquement au moyen informatique centralisé, et permettant son administration uniquement à distance par le moyen informatique centralisé, et
∘ d'autre part, autorisant uniquement une configuration locale de paramètres locaux par un moyen de configuration local qui est accessible et visible de l'utilisateur, ledit moyen de configuration local comportant un afficheur et un ensemble de touches disposés sur le boîtier et permettant une configuration de l'adresse réseau du boîtier,
- les moyens d'exploitation et les informations nécessaires au fonctionnement dudit boîtier distant étant stockés de manière cryptée dans ledit boîtier distant,
∘ le boîtier étant destiné à former avec le moyen informatique centralisé sécurisé un ensemble fonctionnellement indissociable : le boitier ne pouvant se connecter qu'au moyen informatique centralisé sécurisé et, réciproquement, le moyen informatique centralisé sécurisé n'acceptant de connexion que dudit boitier authentifié.

2. Boîtier distant selon la revendication 1, **caractérisé en ce qu'**il est configuré afin que la liaison tunnel chiffrée sur réseau public s'effectue indirectement à partir du boîtier distant, le boîtier distant étant relié à un réseau local et un équipement d'interconnexion au réseau public étant relié audit réseau local.

3. Boîtier distant selon la revendication 1, **caractérisé en ce qu'**il est configuré afin que la liaison tunnel chiffrée sur réseau public s'effectue directement à partir du boîtier distant, soit un équipement d'interconnexion au réseau public est disposé entre l'entrée/sortie de réseau informatique du boîtier distant et le réseau public, soit l'équipement d'interconnexion au réseau public est incorporé au boîtier distant.

4. Boîtier distant selon l'une quelconque des revendications précédentes, **caractérisé en ce que** l'afficheur comporte un afficheur alphanumérique à cristaux liquides, l'ensemble de touches étant un ensemble réduit de moins de 7 touches.

5. Boîtier distant selon l'une quelconque des revendications précédentes, **caractérisé en ce que** les moyens d'identifications sont choisis parmi un ou plusieurs des moyens suivants : un lecteur de carte à puce, un lecteur biométrique, un lecteur d'empreinte digitale.

6. Système informatique d'accès sécurisé à des données confidentielles par le boîtier distant (4) de l'une quelconque des revendications précédentes, les données étant stockées dans un moyen informatique centralisé sécurisé (3), le boîtier et le moyen informatique centralisé sécurisé constituant le système, **caractérisé en ce que** le moyen informatique centralisé comporte en outre un pare-feu (9) sur la liaison tunnel chiffrée.

7. Système selon la revendication 6, **caractérisé en ce que** le moyen informatique centralisé comporte un serveur SSTP de liaison tunnel SSL, au moins un serveur d'application comportant les données confidentielles, un serveur de gestion de la sécurité, lesdits serveurs du moyen informatique centralisé étant sur un réseau local dédié.

8. Système selon la revendication 7, **caractérisé en ce que** le moyen informatique centralisé comporte en outre un serveur de sauvegarde sur le réseau local dédié.

## Patentansprüche

1. Entfernte Einheit für eine Benutzung in einem Computersystem mit gesichertem Zugang zu vertraulichen Daten über mindestens eine durch einen Benutzer benutzte entfernte Einheit (4), die spezifisch und ausschließlich für diesen gesicherten Zugang ausgelegt ist, wobei die Daten in einem gesicherten zentralen Computermittel (3) gespeichert sind, das ein Mittel zur Verarbeitung der Daten zum Erzeugen von Resultaten aufweist, wobei eine verschlüsselte getunnelte Computerverbindung (2) im öffentlichen Netz zwischen der entfernten Einheit und dem zentralen Computermittel eingerichtet ist, wobei die entfernte Einheit ein Mikrocomputer ist, der unter einem lokalen Betriebssystem arbeitet, das durch eine Startphase startet, wobei das System so ausgelegt ist, daß die entfernte Einheit bei Zugängen zu den Daten nur Anzeigeinformationen erhält, die mit der an den Daten vorgenommenen Verarbeitung zusammenhängen und vom zentralen Computermittel erzeugt worden sind, wobei die Daten des zentralen Computermittels also nicht an die Einheit übermittelt werden, wobei der Mikrocomputer der entfernten Einheit in Form einer Elektronikkarte vorliegt, die Eingänge/Ausgänge und einen elektronischen Verschlüsselungsschaltkreis aufweist,
**dadurch gekennzeichnet, daß** die entfernte Einheit aus einer versiegelten Einheit besteht und daß
- die Elektronikkarte
= einen Eingang/Ausgang, der für (ein) mit wenigstens einem Identifizierungsmittel des Benutzers verbundene(s) Identifizierungsmittel (6) bestimmt ist, und
= einen Eingang/Ausgang zum Datennetz (7), der für die verschlüsselte getunnelte Computerverbindung bestimmt ist,
aufweist und daß
- die entfernte Einheit (4) Verarbeitungsmittel aufweist, die
= einerseits, und unter der Bedingung einer Authentifizierung des Benutzers, die Eröffnung einer lokalen Sitzung auf der Einheit und die Durchführung einer Startphase mit Herstellen der verschlüsselten getunnelte Computerverbindung zwischen der entfernten Einheit und dem zentralen Computermittel ermöglichen, wobei die entfernte Einheit logisch in das zentrale Computermittel integriert wird und deren ausschließliche entfernte Verwaltung durch das zentrale Computermittel ermöglicht, und
= andererseits nur eine lokale Konfiguration von lokalen Parametern durch ein lokales Konfigurationsmittel zulassen, das für den Benutzer zugänglich und sichtbar ist, wobei die lokalen Konfigurationsmittel ein Anzeigemittel und eine Tastatureinheit aufweisen, die auf der Einheit angeordnet sind und eine Konfiguration der Netzadresse der Einheit ermöglichen,
- wobei die Verarbeitungsmittel und die für den Betrieb der entfernten Einheit notwendigen Informationen in verschlüsselter Form in der entfernten Einheit gespeichert sind,
= wobei die Einheit dazu bestimmt ist, mit dem gesicherten zentralen Computermittel eine funktionsmäßig untrennbare Einheit zu bilden, indem die Einheit nur mit dem gesicherten zentralen Computermittel verbunden werden kann und das gesicherte zentrale Computermittel im Gegenzug nur eine Verbindung mit der authentifizierten Einheit akzeptiert.

2. Entfernte Einheit gemäß Anspruch 1, **dadurch gekennzeichnet, daß** sie so konfiguriert ist, daß die verschlüsselte getunnelte Verbindung im öffentlichen Netz indirekt von der entfernten Einheit aus erfolgt, wobei die entfernte Einheit mit einem lokalen Netz verbunden ist und eine Ausrüstung zum Verbinden mit dem öffentlichen Netz mit dem lokalen Netz verbunden ist.

3. Entfernte Einheit gemäß Anspruch 1, **dadurch gekennzeichnet, daß** sie so konfiguriert ist, daß die verschlüsselte getunnelte Verbindung im öffentlichen Netz direkt von der entfernten Einheit aus erfolgt, wobei eine Ausrüstung zum Verbinden mit dem öffentlichen Netz zwischen dem Eingang/Ausgang der entfernten Einheit zum Datennetz und dem öffentlichen Netz eingefügt ist oder die Ausrüstung zum Verbinden mit dem öffentlichen Netz in der entfernten Einheit enthalten ist.

4. Entfernte Einheit gemäß einem der vorangehenden Ansprüche, **dadurch gekennzeichnet, daß** das Anzeigemittel eine alphanumerische Anzeige aus Flüssigkristallen aufweist, wobei die Tastatureinheit eine reduzierte Einheit mit weniger als sieben Tasten ist.

5. Entfernte Einheit gemäß einem der vorangehenden Ansprüche, **dadurch gekennzeichnet, daß** die Identifizierungsmittel unter einem oder mehreren der folgenden Mittel ausgewählt sind: ein Chipkartenleser, ein biometrischer Leser, ein Fingerabdruckleser.

6. Computersystem mit gesichertem Zugang zu vertraulichen Daten über die entfernte Einheit gemäß einem der vorangehenden Ansprüche, wobei die Daten in einem gesicherten zentralen Computermittel (3) gespeichert sind, wobei die Einheit und das gesicherte zentrale Computermittel das System bilden, **dadurch gekennzeichnet, daß** das zentrale Computermittel außerdem eine Firewall (9) auf der verschlüsselten getunnelten Verbindung aufweist.

7. System gemäß Anspruch 6, **dadurch gekennzeichnet, daß** das zentrale Computermittel einen SSTP-Server für eine getunnelte SSL-Verbindung, wenigstens einen Anwendungs-Server, der die vertraulichen Daten enthält, einen Server für die Verwaltung der Sicherheit aufweist, wobei sich die Server des zentralen Computermittels auf einem speziellen lokalen Netz befinden.

8. System gemäß Anspruch 7, **dadurch gekennzeichnet, daß** das zentrale Computermittel außerdem einen Backup-Server aufweist

## Claims

1. A remote unit to be implemented in a computer system for securely accessing confidential data by means of at least one remote unit (4) used by a user and specially and uniquely adapted for this confidential access, the data being stored in a secured centralized computer means (3) comprising means for processing said data, intended for producing results, an encrypted tunnel computer connection (2) over a public network being established between said remote unit and the centralized computer means, the remote unit being a microcomputer operating under the dependency of a local operating system starting by a boot phase, the system being configured in such a manner that, when data are accessed, said remote unit receives only display information related to the process carried out on the data and produced by the centralized computer means, the data of the centralized computer means thus being not transmitted to the unit, the microcomputer of the remote unit being in the form of an electronic card comprising inputs/outputs and an encryption electronic circuit,
**characterized in that** said remote unit is consisted of a sealed unit and **in that**
- the electronic card comprises:
• one input/output (6) intended for identification mean(s) connected to at least one user identification means, and
• one computer network input/output (7) intended for the encrypted tunnel connection, and **in that**
- the remote unit (4) comprises operating means allowing:
• on the one side and under the condition of an authentication of the user, the opening of a local session on the unit and the implementation of a boot phase with the creation of the encrypted tunnel computer connection between said remote unit and the centralized computer means, the remote unit then being logically integrated to the centralized computer means, and allowing its administration only remotely by the centralized computer means, and
• on the other side, only allowing a local configuration of local parameters by a local configuration means that is accessible and visible by the user, said local configuration means comprising a display and a set of keys arranged on the unit and allowing a configuration of the network address of the unit,
- the operating system as well as the information required for the operation of said remote unit being stored in encrypted form in said remote unit,
• the unit being intended to create a functionally indissociable set with the secured centralized computer means: the unit only connecting to the secured centralized computer means and, conversely, the secured centralized computer means only accepting connection from the authenticated unit.

2. A remote unit according to claim 1, **characterized in that** it is configured so that the encrypted tunnel connection over a public network is made indirectly from the remote unit, the remote unit being connected to a local network and an equipment for interconnection to the public network being connected to said local network.

3. A remote unit according to claim 1, **characterized in that** it is configured so that the encrypted tunnel connection over a public network is made directly from the remote unit, with either an equipment for interconnection to the public network arranged between the computer network input/output of the remote unit and the public network, or the equipment for interconnection to the public network is incorporated to the remote unit.

4. A remote unit according to any one of preceding claims, **characterized in that** the display comprises a liquid crystal alphanumerical display, the set of keys being a reduced set of less than 7 keys.

5. A remote unit according to any one of the preceding claims, **characterized in that** the identification means are chosen among one or several of the following means: smart card reader, biometric reader, fingerprint reader.

6. A computer system for securely accessing confidential data by the remote unit (4) of any one of the preceding claims, the data being stored in a secured centralized computer means (3), the unit and the secured centralized computer means constituting the system, **characterized in that** the centralized computer means further comprises a firewall (9) over the encrypted tunnel connection.

7. A system according to claim 6, **characterized in that** the centralized computer means comprises an SSTP server of a SSL tunnel connection, at least one application server comprising the confidential data, one security management server, said servers of the centralized computer means being located on a dedicated local network.

8. A system according to claim 7, **characterized in that** the centralized computer means further comprises a backup server on the dedicated local network.
